# EUROPEAN PATENT APPLICATION

(11) **EP 2 216 746 A1**
(43) Date of publication of application: **11.08.2010**
(21) Application number: 10001340.8
(22) Date of filing: 09.02.2010
(51) Int. Cl.: G06Q 30/00

(54) **Methods and apparatus to model consumer awareness for changing products in a consumer purchase model**

(30) Priority: 09.02.2009 US 368028
(71) Applicant: The Nielsen Company (US), LLC, Schaumburg, IL 60173 (US)
(72) Inventor: Kelly Zimmerman, William, Hamilton Ohio 45011 (US); Smith, Brian Rober, Cincinnati Ohio 45208 (US); Fix, John P., Maineville Ohio 45039 (US); Noble, Steven S., Soquel California 95073 (US)
(74) Representative: Samson & Partner

(57) **Abstract**

Example methods and apparatus to model consumer awareness for changing products in a consumer purchase model are disclosed. A disclosed example method includes receiving utility values associated with at least one of a product or a product attribute, and identifying an agent awareness state associated with the restage product and the original product. The example method also includes calculating a choice probability for the restage product based on the estimated utility values associated with the identified awareness state, and outputting the choice probability for use in a simulation of consumer purchase.

## Description

### FIELD OF THE DISCLOSURE

This disclosure relates generally to product market research and, more particularly, to methods and apparatus to model consumer awareness for changing products in a consumer purchase model.

### BACKGROUND

Market researchers attempt to advance product acceptance, product popularity, and/or product sales through any number of activities and/or changes to the product. Activities to improve product sales volume include running one or more advertising campaigns and/or running one or more product promotional activities. Changes which may be made to a product include altering product packaging, altering product trade dress, and/or altering one or more features of the product of interest (e.g., improving diaper absorbency, improving cleaning power, etc.). Products which have been subjected to such activities and/or changes are referred to as a restage product.

In attempts to determine whether one or more activities and/or one or more changes to the product improve sales, market researchers may compare sales volumes before the changes to sales volumes after the changes. For example, in the event that sales for a particular market geography and/or demographic increase after one or more advertising campaigns are executed, the market researchers may attribute such increases to the campaigns. However, information indicative of increased or decreased sales after a change to the product of interest may not identify which restage attributes are responsible for such sales changes.

### SUMMARY

Computer implemented methods to model consumer purchase decisions for restage products, apparatus to model a restage product and a corresponding article of manufacture as defined in the appended claims are disclosed.

An example computer implemented method to model consumer purchase decisions for restage products, comprises: receiving utility values associated with at least one of a product or a product attribute; identifying an agent awareness state associated with the restage product and the original product; calculating a choice probability for the restage product based on the estimated utility values associated with the identified awareness state; and outputting the choice probability for use in a simulation of consumer purchase. Receiving the utility values may further comprise retrieving respondent choice data from a panel of respondents participating in a discrete choice study. Receiving the utility values may further comprise applying the respondent choice data to a hierarchical Bayes model. The method may further comprise projecting the utility values of the panel of respondents to a set of agents to participate in at least one consumer purchase simulation. The method may further comprise initializing each agent within the set of agents with at least one utility set of values. The method may further comprise initializing each agent within the set of agents with at least one purchasing rule. The at least one purchasing rule may comprise at least one of a shopping frequency or an awareness state. The method may further comprise generating at least one product consideration set available to the set of agents during the at least one purchasing simulation. The method may further comprise injecting at least one of advertising attributes, price attributes, product availability attributes, or promotional attributes to the at least one purchasing simulation. Calculating the choice probability may further comprise applying the received utility values to a multinomial logit model. The method may further comprise simulating consumer purchase decisions based on the choice probability and the received utility values associated with the agent awareness state. Simulating consumer purchase decisions may further comprise applying the received utility values and the choice probability to an agent based model. The method may further comprise calculating an emergent pattern based on a plurality of product and restage product sets available to the set of agents in the at least one purchasing simulation. Identifying the agent awareness state may further comprise identifying an unaware state when the agent is unaware of the original product and unaware of the restage product. Identifying the agent awareness state may further comprise identifying a state indicative of agent awareness of the original product and unawareness of the restage product. Calculating the choice probability may further comprise applying the received utility value associated with the original product to a pattern model when the agent is aware of the original product and unaware of the restage product. Identifying the agent awareness state may further comprise identifying a state indicative of agent awareness of the restage product and the original product. Calculating the choice probability may further comprise applying the received utility value associated with the original product and the restage product to a pattern model when the agent is aware of the original product and the restage product. Identifying the agent awareness state associated with the restage product may comprise identifying at least one alternate attribute for which the agent is aware. Identifying the agent awareness state associated with the restage product may occur prior to calculating the choice probability. The at least one of the product may comprise an original product. The at least one of the product may comprise a restage product. The at least one of the product may comprise a restage change.

An example apparatus to model a restage product may comprise: a utility estimator to estimate utility values associated with an original product and a restage change; an awareness manager to identify a respondent awareness state of a plurality of agents associated with the restage product and the original product; and a relative probability calculator to calculate a choice probability value for the restage product and the original product based on the calculated utility values associated with the respondent awareness state. The apparatus may further comprise a discrete choice exercise engine to obtain a plurality of respondent choice decisions, the choice decisions provided to the utility estimator to estimate the utility values. The apparatus may further comprise an agent manager to project the plurality of respondents to a plurality of agents to participate in at least one purchasing simulation. The apparatus may further comprise a simulation framework manager to initialize each of the plurality of agents with at least one of a purchasing rule or an awareness state. The apparatus may further comprise a consumer purchase simulator to generate at least one product consideration set available to the plurality of agents. The apparatus may further comprise a simulation framework manager to simulate consumer purchase decisions based on the choice probability value and the agent awareness state.

An example article of manufacture may store machine accessible instructions that, when executed, cause a machine to: receive utility values associated with at least one of a product or a product attribute; identify an agent awareness state associated with the restage product and the original product; calculate a choice probability for the restage product based on the estimated utility values associated with the identified awareness state; and output the choice probability for use in a simulation of consumer purchase. The machine readable instructions, when executed, may cause the machine to retrieve respondent choice data from a panel of respondents participating in a discrete choice study. The machine readable instructions, when executed, may cause the machine to apply the respondent choice data to a hierarchical Bayes model. The machine readable instructions, when executed, may cause the machine to project the utility values of the panel of respondents to a set of agents to participate in at least one consumer purchase simulation. The machine readable instructions, when executed, may cause the machine to initialize each agent within the set of agents with at least one utility set of values. The machine readable instructions, when executed, may cause the machine to initialize each agent within the set of agents with at least one purchasing rule. The machine readable instructions, when executed, may cause the machine to generate at least one product consideration set available to the set of agents during the at least one purchasing simulation. The machine readable instructions, when executed, may cause the machine to inject at least one of advertising attributes, price attributes, product availability attributes, or promotional attributes to the at least one purchasing simulation. The machine readable instructions, when executed, may cause the machine to apply the received utility values to a multinomial logit model. The machine readable instructions, when executed, may cause the machine to simulate consumer purchase decisions based on the choice probability and the received utility values associated with the agent awareness state. The machine readable instructions, when executed, may cause the machine to apply the received utility values and the choice probability to an agent based model. The machine readable instructions, when executed, may cause the machine to calculate an emergent pattern based on a plurality of product and restage product sets available to the set of agents in the at least one purchasing simulation. The machine readable instructions, when executed, may cause the machine to identify an unaware state when the agent is unaware of the original product and unaware of the restage product. The machine readable instructions, when executed, may cause the machine to identify a state indicative of agent awareness of the original product and unawareness of the restage product. The machine readable instructions, when executed, may cause the machine to apply the received utility value associated with the original product to a pattern model when the agent is aware of the original product and unaware of the restage product. The machine readable instructions, when executed, may cause the machine to identify a state indicative of agent awareness of the restage product and the original product. The machine readable instructions, when executed, may cause the machine to apply the received utility value associated with the original product and the restage product to a pattern model when the agent is aware of the original product and the restage product. The machine readable instructions, when executed, may cause the machine to identify at least one alternate attribute for which the agent is aware.

### BRIEF DESCRIPTION OF THE DRAWINGS

FIG. 1 is a schematic illustration of an example preference modeling and consumer purchase simulation system constructed in accordance with the teachings of this disclosure.
FIG. 2 is a schematic illustration of the example simulation engine shown in FIG. 1.
FIG. 3 is a table of example awareness rules constructed in accordance with the teachings of this disclosure.
FIGS. 4 and 5 are flowcharts representative of example machine readable instructions that may be performed by, for example, the example simulation engine shown in FIGS. 1 and 2.
FIG. 6 is a schematic illustration of an example processor platform that may execute the instructions of FIGS. 4 and/or 5 to implement any or all of the example methods and apparatus described herein.

### DETAILED DESCRIPTION

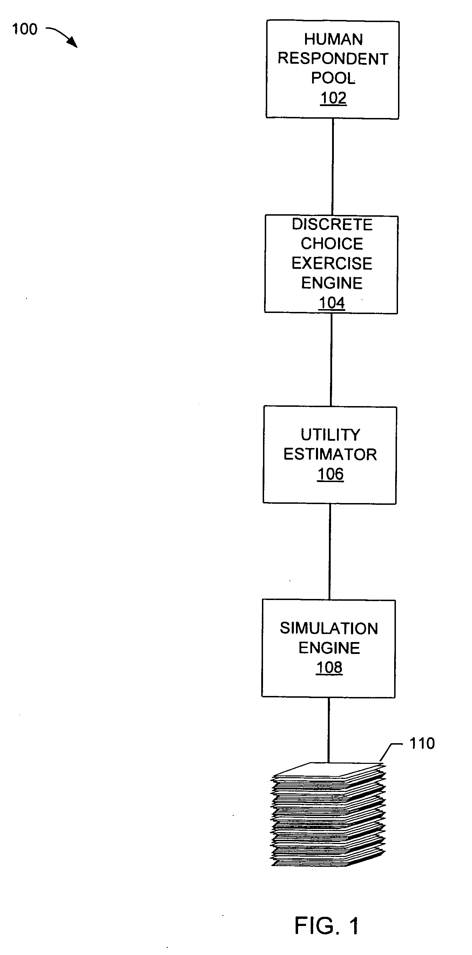

In the interest of brevity and clarity, throughout the following disclosure, references will be made to the example preference modeling and consumer purchase simulation system 100 of FIG. 1. However, the methods and apparatus described herein to model consumer awareness are applicable to other types of systems constructed using other communication technologies, topologies, and/or elements.

Market researchers, product promoters, marketing employees, agents, and/or other people and/or organizations chartered with the responsibility of product management (hereinafter collectively referred to as "sales forecasters") typically attempt to justify marketing decisions based on one or more techniques likely to result in increased sales of a product of interest. Often, sales forecasting is an important step in the evaluation of potential product initiatives, and a key qualification factor for the decision to launch inmarket. As such, accurate forecasting models are important to facilitate these decisions. One specific type of initiative that adds an extra layer of complexity compared to a new product or line extension is a restage initiative. A restage initiative replaces an existing product or group of products with a modified form of the product. Examples of modifications include, but are not limited to new product formulation(s), new packaging, new sales messaging, etc. Simulating restage initiatives typically requires modeling both the consumer response to the intrinsic product change, and also the rate at which consumers become aware and digest the change that has occurred to the product.

In a restage situation, an original product or group of products undergoes one or more changes in its intrinsic attributes to become the new (restaged) product. As such, consumers have preferences (utilities) for the original product and/or separate preferences for the restage change(s). Simulations of consumer acceptance of restage initiatives that do not address this shift in preferences in sufficient detail run the risk of overestimating or underestimating the impact of a restage change.

The methods and apparatus described herein include, in part, rules to model brand and/or product restage introductions to a market, thereby capturing more accurate information related to the product adoption. The methods and apparatus described herein address phenomena and/or one or more patterns associated with product and restage awareness after the restage product has been introduced into the market. Each consumer awareness state, if known, allows the sales forecaster to identify whether the purchase is likely to be made in view of known restage attributes (e.g., a style change, product packaging changes, feature changes/improvements, etc.), or whether the restage product will likely be purchased for one or more alternate reasons. For example, despite the fact that a restage product is available to the consumer (e.g., on a store shelf), merely purchasing the restage product does not necessarily indicate that the consumer is reacting to the restage attribute(s). Instead, the consumer may simply be accustomed to a particular brand and/or trademark, but have no knowledge that the purchased product has undergone a restage. Distinguishing between consumer awareness states allows the sales forecaster to model consumer behavior by applying utilities associated with either the original product or the restage, which further illustrates one or more reasons (e.g., one or more attributes associated with the purchased product) the consumer would deem relevant to their purchasing decision. As such, the sales forecaster may learn which attributes to, for example, greater emphasize and/or highlight during subsequent advertising efforts and/or to identify which attributes should be included in the restage product at the time it is released in the market for purchase.

Example methods and apparatus to model consumer awareness for changing products in a consumer purchase model are disclosed. A disclosed example method includes receiving utility values associated with at least one of a product or a product attribute, and identifying an agent awareness state associated with the restage product and the original product. The example method also includes calculating a choice probability for the restage product based on the estimated utility values associated with the identified awareness state, and outputting the choice probability for use in a simulation of consumer purchase.

A disclosed example apparatus includes a utility estimator to estimate utility values associated with an original product and a restage change, an awareness manager to identify a respondent awareness state of a plurality of agents associated with the restage product and the original product, and a relative probability calculator to calculate a choice probability value for the restage product and the original product based on the calculated utility values associated with the respondent awareness state.

FIG. 1 is a schematic illustration of an example preference modeling and consumer purchase simulation system 100, which monitors a human respondent pool 102. The example human respondent pool 102 may include any number of panelist groupings/sets related to a demographic of interest and/or one or more geographies of interest. Such panelists and/or sets of panelists may be selected based on a statistical grouping to allow projection to a larger universe of similar consumers, a larger universe of households, and/or a larger universe of agents for use in an agentbased model, as described in further detail below. The example preference modeling and consumer purchase simulation system 100 includes a discrete choice exercise engine 104 communicatively connected to a utility estimator 106. Generally speaking, the example discrete choice engine 104 obtains choice data from the example human respondent pool 102, and the example utility estimator 106 estimates corresponding utility values for the parameters of interest, which my include, but not limited to product attributes, restage attributes, and price. Estimated utilities from the example utility estimator 106 are provided to an example simulation engine 108 to apply the estimated utilities in a manner that simulates purchase decisions in a virtual marketplace, and is capable of representing or predicting product acceptance and sales. One example of this type of simulation engine includes an agentbased modeling platform that contains distribution, advertising, and price inputs for each product to create the virtual marketplace.

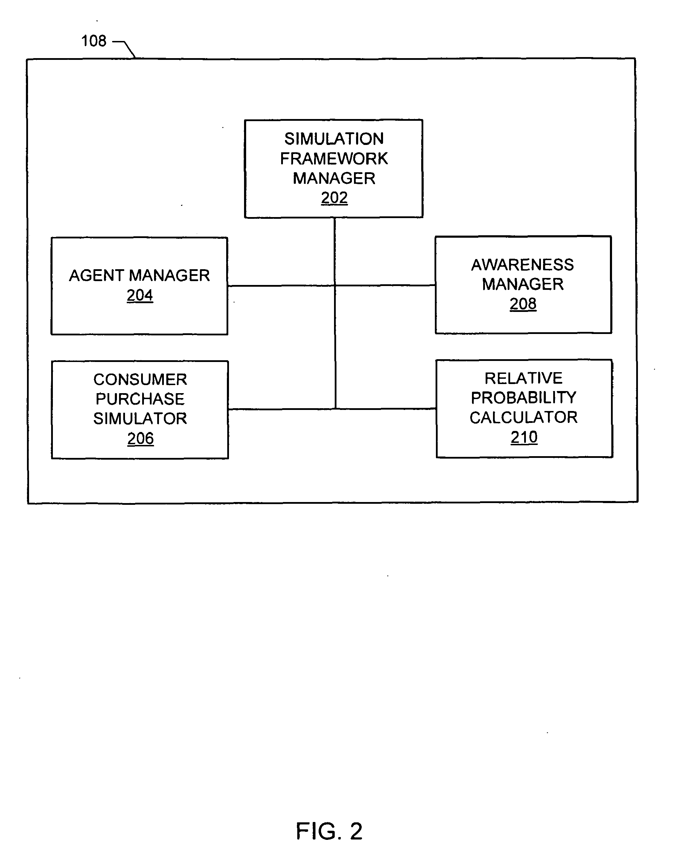

FIG. 2 is a detailed schematic illustration of the example simulation engine 108 of FIG. 1. The example simulation engine 108 includes a simulation framework manager 202, an agent manager 204, and a consumer purchase simulator 206. The example simulation engine 108 also includes an awareness manager 208 and a relative probability calculator 210.

In operation, the example simulation framework manager 202 initiates each of the example agent manager 204, the example consumer purchase simulator 206, the example awareness manager 208, and the relative probability calculator 210. Additionally, the example simulation framework manager 202 identifies and/or applies one or more shopping rules for agents, selects one or more products to be used in one or more simulations, and/or adjusts one or more attributes of a selected product during the one or more simulations, thereby allowing the sales forecaster to gain further insight related to the consumer adoption process before a product is actually released into the public market.

The example simulation framework manager 202 invokes the example agent manager 204 to retrieve and/or otherwise receive estimated utility values from the example utility estimator 106, which are derived from the example discrete choice exercise engine 104. A utility (a relative preference) may be estimated for one or more attributes. Attributes include, but are not limited to price, size, product feature, quantity, etc. Each attribute may further have one or more ranges (e.g., a price between $1.25 and $3.25). To estimate the one or more utility values (also referred to herein as "utilities"), the example utility estimator 106 employs a classification model, such as an example hierarchical Bayes estimation. The example hierarchical Bayes estimation estimates at a level of resolution related to the respondent rather than a more generalized population level, but any other technique to estimate utilities may be employed. As such, respondentlevel estimation provides insight to heterogeneity of preferences among the population.
In the event that such utilities are estimated based on observed panelist behavior, the estimated utilities may be projected to a larger audience in a manner that comports with statistical confidence. The example agent manager initializes one or more groups of agents, which are projected from the respondents in the example human respondent pool 102, to represent simulated consumers so that each agent is associated with at least one set of utility values. For example, if the example utility estimator 106 includes utility values from 500 human respondents, then the example agent manager 204 may project a set of 50,000 agents to participate in one or more consumer purchase simulation(s), in which each agent carries one of the utility sets associated with one of the human respondents.

One or more product consideration sets, which may include original products and/or restage products, are selected by the example consumer purchase simulator 206. Available products capable of purchase by an agent during a simulated consumer purchase are arranged in one or more sets. While any product utility value calculated by the utility estimator 106 with a pattern model,(e.g., the hierarchical Bayes estimation pattern model) may identify an absolute utility value, such utility values provide insight regarding a likelihood of preference to an agent only when compared with other available products in a set to calculate a choice probability. Additionally, and as discussed in further detail below, a multinomial logit model may be used to produce one or more probabilities based on utility input(s). For example, given a set of products A, B, and C (each having its own utility value), a corresponding choice probability can be calculated in a manner that directly considers the other products within the set. In the set of A, B, and C, product A may be preferred 2:1 over product C. However, an alternate set of products A, D, and C will each have different choice probabilities by virtue of the makeup of other products available in the set. For example, while product A may be the favorite product in the set of A, B, C with a choice probability of 70%, within the context of the A, D, C set, it may instead have a choice probability of 5%. Additionally, while the aforementioned example utilities are described in view of the product and/or restage product as a whole, one or more utility values may be employed that are specific to a specific attribute of the original product and/or restage product.

In the illustrated example of FIG. 2, the one or more product consideration sets are selected by the example consumer purchase simulator 206 to, in part, simulate degrees of product availability for the agents. Agents may be exposed to an original product of interest and/or a restage product as described by a producer, manufacturer, distributor, etc. Alternatively, the agents may participate in the purchasing simulation in which the product of interest or the restage product is not available to, in part, observe what type(s) of choices agents make in view of the unavailability of particular products and/or particular sets of products. Additionally, one or more specific attributes of one or more selected products within any product set may further be adjusted during one or more simulations by the example simulation framework manager 202. For instance, the simulation framework manager 202 generates and/or injects one or more purchase simulation conditions to the purchase simulation exercise including, but not limited to, advertising attributes, promotional attributes (e.g., coupons, trade promotions, etc.), product price changes, seasonal availability, etc. Each agent may also be set up to exhibit one or more simulated shopping behaviors, such as agents that shop three times in a given time period versus agents that shop seven times within the given time period. Any number of agent utility values and/or simulated shopping behaviors may be applied to each of the agents in the set of agents participating in the purchase simulation to, in part, identify attributes that cause and/or otherwise affect one or more purchasing behaviors.

In the illustrated example of FIG. 2, the awareness manager 208 tracks an awareness value for each product for each of the agents. Without limitation, data related to an awareness of each human respondent may have been collected and/or associated with each respondent via one or more surveys and/or questions provided to each respondent during, for example, a selection process of the pool of respondents 102. Surveys and/or questions to ascertain awareness state(s) of human respondents may be tailored in any manner to minimize or avoid alerting the respondent(s) of a restage product in case they do not already know about it. Awareness states of the respondents may be attributed to the projected pool of agents, and/or the example awareness manager 208 may identify and/or assign an awareness state for each agent in the consumer purchase simulation. For example, the awareness manager 208 may assign an awareness state of "unaware" to simulate the effect of a consumer forgetting about an advertisement for a particular product or product restage, and/or the example awareness manager 208 may assign an increasing number of "aware" states as the simulation progresses over time to represent the effect of advertising presence for the product of interest and/or its associated restage. Generally speaking, respondent awareness represents knowledge of the product of interest, knowledge of the restage product, and/or knowledge that the restage product represents a change to the product of interest that has existed in the past.

In the illustrated example of FIG. 2, choice probability calculations are performed by the relative probability calculator 210 using utility values. In particular, each choice probability calculation employs a utility value associated with the original product or a combination of utility values associated with the original product and the restage product within the context of the full consideration set of products. In operation, the example relative probability calculator 210 employs one or more utility values based on the awareness state of each corresponding agent. An agent must be aware of a product and/or product restage in order for that product or product restage to be included in the agent's consideration set. The agent is associated with at least one state based on the respondent from which the agent is derived and/or based on an awareness assignment by the example awareness manager 208 as described above. Awareness states may include, but are not limited to, a preuse awareness state, a postuse awareness state, and notaware state. In the event that the agent has not used the product of interest or the restage product, then that agent is associated with a state of preuse. However, in the event that the agent has used the product of interest or the restage product, then that agent is associated with a state of postuse. Otherwise, the agent is deemed to have a state of notaware if that agent is aware of neither the product or interest nor the restage product. Agents that are considered to have a state of preuse and postuse may also be either aware or notaware of the product of interest or the restage product. For example, in the event that the agent has not used the product of interest or the restage product, that agent may be associated with a state of preuseaware if that agent has not used the product, but is aware of it via, for example, advertising, promotions, storeshelf presence, etc. For circumstances in which the agent has used the product or restage, then that agent is identified as having a state of postuseaware.

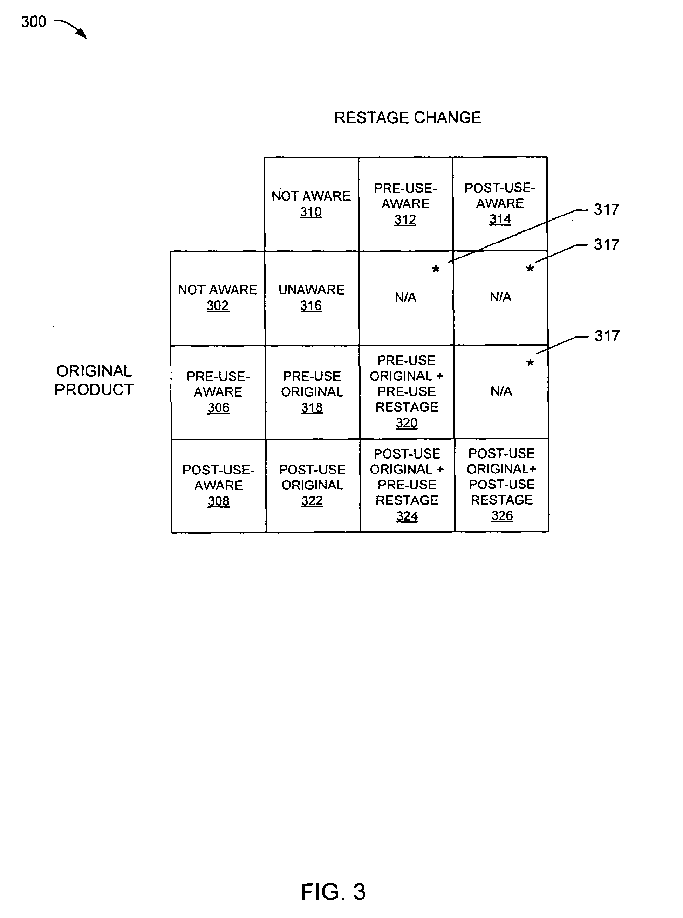

FIG. 3 is a table 300 of example awareness rules applied to each agent and corresponding product and restage. In the illustrated example of FIG. 3, the table 300 includes original product awareness states of notaware 302, preuseaware 304, and postuseaware 306. The example table 300 also includes restage awareness states of notaware 310, preuseaware 312, and postuseaware 314. Awareness of the restage occurs only when the restage is active (i.e., the restage product is being offered for real or virtual consumer purchase). For circumstances in which the agent (or respondent in the event that awareness is determined via one or more surveys of human respondents from the example respondents pool 102) is not aware of the original product or the restage, then that agent is deemed unaware as shown by an intersection 316 of the notaware stages 302 and 310, respectively. Additionally, in the event that an agent or consumer is not aware of a product and/or a restage at the time of shopping, then such agents and/or consumers are not allowed to purchase such products/restages during that particular simulated shopping occasion. As such, the asterisk 317 illustrated in FIG. 3 identifies awareness states that are not applicable (N/A) during the one or more simulated shopping occasions.

For circumstances in which the agent has not used the original product, but is aware of the original product 306, and has not used the restage product, and is not aware of the restage product 310, then the respondent is deemed to have a state of preuseoriginal 318, in which only the utility values associated with the original product preuse are used when analyzing and/or determining which attributes may be relevant during the purchasing decision(s) of the respondent. Such circumstances may occur when a consumer is brandloyal and/or responsive to a familiar trademark, product packaging design, and/or tradedress and purchases the restage product without knowledge of one or more new and/or alternate product attributes. However, for circumstances in which the agent has not used, but is aware of the original product 306, and has not used, but is aware of the restage product 312, then that respondent is deemed to have a state of preuseawareoriginal and preuseawarerestage 320 because utility values associated with both the original product preuse and the restage product preuse may be relevant to the purchasing decisions made by the consumer.

For circumstances in which the respondent is aware of the original product from prior use 308, but not aware of the restage 310, the respondent is deemed to have a state of postuseoriginal 322, in which only the utility values associated with the original product postuse are deemed to contribute to the respondent's purchasing decision. However, if the respondent becomes aware of the restage 312 from, for example, advertising activity, then the respondent is deemed to have a state of postuseoriginal and preuserestage 324, in which utility values from both the original product postuse and the restage product preuse may be relevant to the purchasing decisions made by the consumer. Finally, if the respondent has used both the original product 308 and the restage product 314, then the respondent is deemed to have a state of postuseoriginal and postuserestage 326, in which both the original product postuse and restage product postuse utility values may be considered as an influence to the consumer's purchasing decision.

To calculate the choice probabilities, which illustrates relational information of sets of available products, the example relative probability calculator 210 employs a probability model, such as a multinomial logit model. Any number of consideration sets may be computed by the example relative probability calculator 210 to generate choice probabilities within each set. Without limitation, choice probability values calculated by the example relative probability calculator 210 may also be affected by distribution metrics (actual and/or simulated distribution values) and/or awareness states of agents.

Product and restage utility values are used as inputs for the example simulation framework manager 202 to identify, in part, emergent patterns from one or more interactions of the agents during the consumer purchase simulation. The sales forecaster may select any number of attributes believed to be relevant to the product or restage including, but not limited to price, product features, and/or a date on which to introduce the restage into the market. The selected attributes and/or product sets are received by the example simulation framework manager 202 to simulate and model actions and interactions of the agents and observe the results of the virtual shopping trips that have occurred. For example, the simulation framework manager 202 may employ an agent based model (ABM) in which each agent is modeled as an autonomous decisionmaking entity. Taken together, the ABM identifies emergent patterns of the agents based on their individual choices.

In the illustrated example of FIG. 2, the utility values are entered into the ABM, or any other model employed by the simulation framework manager 202. For example, as described above in connection with FIG. 3, in the event that the agent knows about the original product, but is unaware of the restage, the utility values applied in the relative choice probability calculator 210, as governed by the simulation framework manager 202, are those associated with the original product, even if the agent is (unknowingly) considering the restage version of the product. In other words, the awareness rules described in connection with FIG. 3 direct the relative probability calculator 210 to use only those utility values in the modeling approach that may influence the agent's decision at the time of purchase. At the time a restage product is made available in the simulation, it typically starts with an awamess level of zero or near zero, but as the consumer purchase simulation iterations proceed, awareness of the restage product can grow as advertising, promotional, and/or distribution activities occur.

While the example preference modeling and consumer purchase simulation system 100 has been illustrated in FIG. 1, one or more of the interfaces, data structures, elements, processes, GUIs, and/or devices illustrated in FIGS. 1 and 2 may be combined, divided, rearranged, omitted, eliminated and/or implemented in any other way. Further, the example simulation engine 108, the example human respondents pool 102, the example discrete choice exercise engine 104, the example utility estimator 106, the example simulation framework manager 202, the example agent manager 204, the example consumer purchase simulator 206, the example awareness manager 208, and/or the example relative probability calculator 210 of FIGS. 1 and 2 may be implemented by hardware, software, firmware and/or any combination of hardware, software and/or firmware. Thus, for example, any of the example simulation engine 108, the example human respondents pool 102, the example discrete choice exercise engine 104, the example utility estimator 106, the example simulation framework manager 202, the example agent manager 204, the example consumer purchase simulator 206, the example awareness manager 208, and/or the example relative probability calculator 210 may be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example simulation engine 108, the example human respondents pool 102, the example discrete choice exercise engine 104, the example utility estimator 106, the example simulation framework manager 202, the example agent manager 204, the example consumer purchase simulator 206, the example awareness manager 208, and/or the example relative probability calculator 210 are hereby expressly defined to include a tangible medium such as a memory, a digital versatile disc (DVD), a compact disc (CD), etc. storing the firmware and/or software. Further still, a communication system may include interfaces, data structures, elements, processes and/or devices instead of, or in addition to, those illustrated in FIGS. 1 and 2 and/or may include more than one of any or all of the illustrated interfaces, data structures, elements, processes and/or devices.

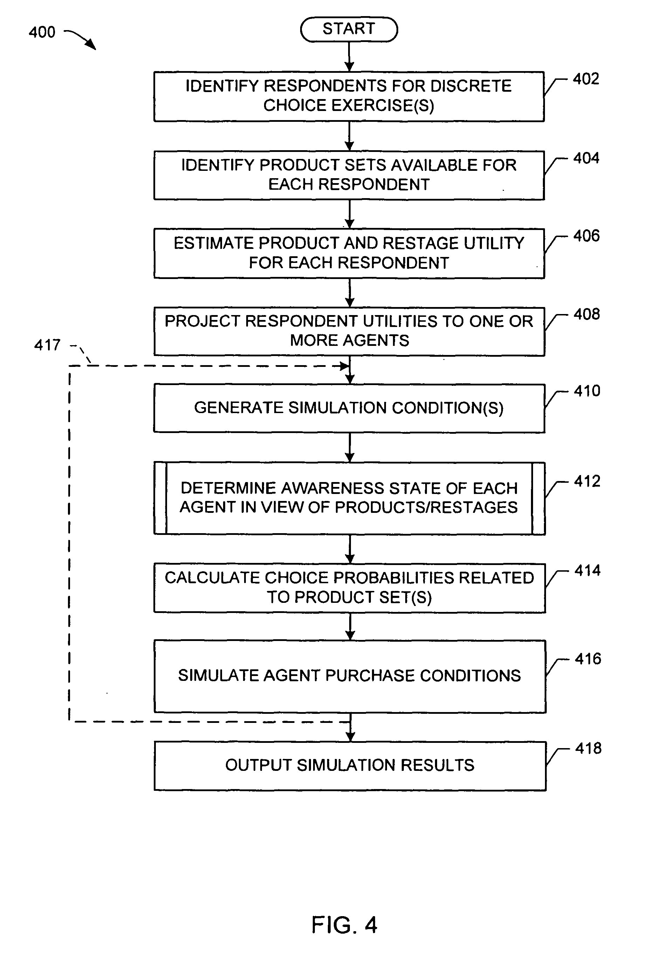

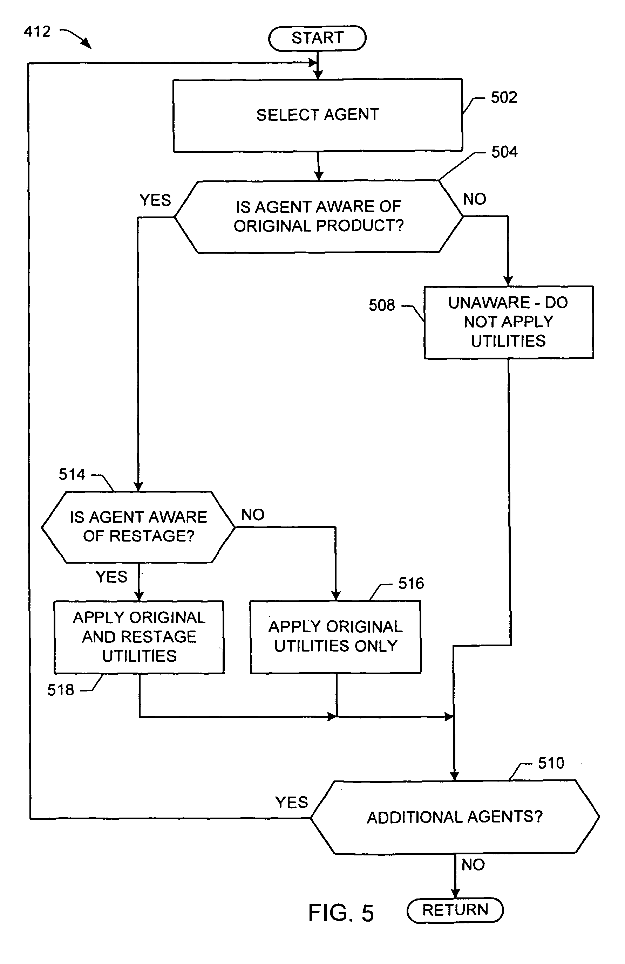

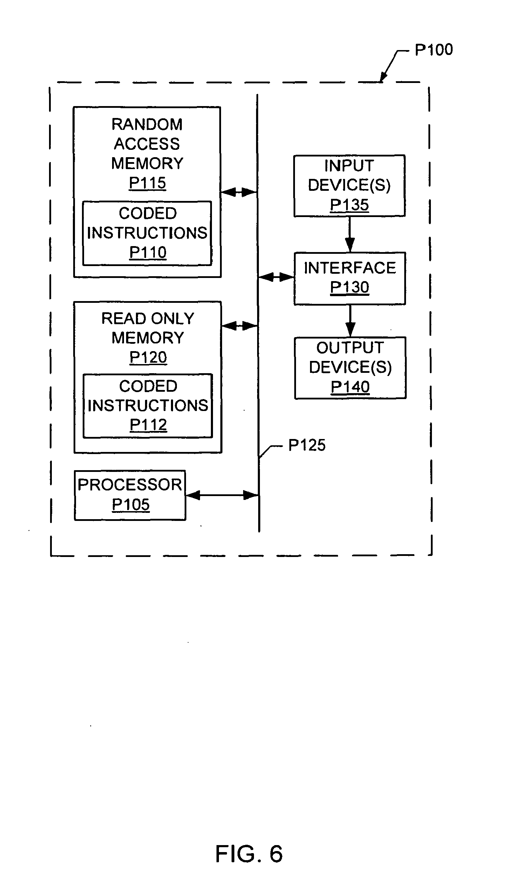

FIGS. 4 and 5 illustrate example machine readable instructions that may be executed to implement the example preference modeling and consumer purchase simulation system 100 and/or the example simulation engine 108 of FIGS. 1 and 2. The example instructions of FIGS. 4 and 5 may be carried out by a processor, a controller and/or any other suitable processing device. For example, the example processes of FIGS. 4 and 5 may be embodied in coded instructions stored on any tangible computerreadable medium such as a flash memory, a CD, a DVD, a floppy disk, a readonly memory (ROM), a randomaccess memory (RAM), a programmable ROM (PROM), an electronicallyprogrammable ROM (EPROM), and/or an electronicallyerasable PROM (EEPROM), an optical storage disk, an optical storage device, magnetic storage disk, a magnetic storage device, and/or any other medium which can be used to carry or store program code and/or instructions in the form of machinereadable instructions or data structures, and which can be accessed by a processor, a generalpurpose or specialpurpose computer, or other machine with a processor (for example, the example processor platform P100 discussed below in connection with FIG. 6). Combinations of the above are also included within the scope of computerreadable media. Machinereadable instructions comprise, for example, instructions and/or data that cause a processor, a generalpurpose computer, specialpurpose computer, or a specialpurpose processing machine to implement one or more particular processes. Alternatively, some or all of the example processes of FIGS. 4 and 5 may be implemented using any combination(s) of ASIC(s), PLD(s), FPLD(s), discrete logic, hardware, firmware, etc. Also, one or more of the example processes of FIGS. 4 and 5 may instead be implemented manually or as any combination of any of the foregoing techniques, for example, any combination of firmware, software, discrete logic and/or hardware. Further, many other methods of implementing the example operations of FIGS. 4 and 5 may be employed. For example, the order of execution of the blocks may be changed, and/or one or more of the blocks described may be changed, eliminated, subdivided, or combined. Additionally, any or all of the example processes of FIGS. 4 and 5 may be carried out sequentially and/or carried out in parallel by, for example, separate processing threads, processors, devices, discrete logic, circuits, etc.

The example instructions 400 of FIG. 4 begin with the example discrete choice exercise engine 104 selecting and/or identifying one or more respondents from panelist groupings/sets from which to obtain choice data (block 402). Respondents may be selected based on, for example, one or more demographic characteristics in a manner to obtain statistical relevance in returned data. As described above, achieving a statistically significant number of respondents allows one or more results to be projected to a larger universe of similar consumers, households, and/or to serve as a basis for one or more agentbased models. For each respondent that is to participate in one or more virtual shopping trips, the example discrete choice exercise engine 104 selects a product set (block 404) that will be presented to the respondent so that one or more corresponding choices may be observed and collected. However, one or more additional and/or alternate product set(s) may be generated by the example consumer purchase simulator 206 during one or more consumer purchase simulation(s), as described above.

The example utility estimator 106 (block 406) receives inputs that contain details of the choice tasks presented to respondents including attribute composition of the alternatives, prices for each alternative, and any other variable being considered for inclusion in the choice model. Additionally, the example utility estimator 106 may analyze the conditions of the choice tasks combined with the respondents' choice data, and produce utility value estimates that best fit the respondent provided choice data. As described above, a best fit may be estimated via execution of the hierarchical Bayes estimation technique(s), but is not limited thereto.

The example agent manager 204 receives the estimated utility values from the utility estimator 106 as inputs and projects such utility values into one or more agent sets (block 408) to be used in one or more consumer purchase simulation(s). To account for one or more shopping circumstances that a consumer may experience in the market, the example consumer purchase simulator 206 generates one or more virtual purchase consideration sets that the agents may experience during the purchase simulation(s) (block 410). Simulation conditions may include, but are not limited to price changes, availability of the products, availability of restage products, promotional elements (e.g., the presence of coupons, instore displays, etc.) and/or one or more alternate product sets.
When a restage is released into the market (i.e. achieves distribution and is offered for sale), awareness of the restage and its associated attributes may not be immediately known to all consumers. Disparity of awareness from one consumer to another consumer may be due to several reasons including, but not limited to, advertising activity (e.g., some geographic regions may spend more/less on advertising than other geographic regions), promotional activity (e.g., instore displays, instore announcements, coupons, etc.), and/or restage product presence differences due to different distribution condition(s) and/or lagtime in distribution within, for example, markets at a greater distance of a distribution center versus markets at a closer distance to the distribution center. As described above, the original product includes an associated utility value that is composed of one or more attributes unique to the product. Similarly, each restage product has an associated utility value that is the result of its unique one or more attributes. If estimations, trends, and/or predictions occur without considering whether or not the consumer is aware of the original product or the restage product, then one or more resulting estimations, trends, and/or predictions may overestimate and/or underestimate the effect of impressions on the consumer. The example awareness manager 208 identifies an awareness state of each agent in view of the original product and/or restage product (block 412). As described in further detail below, one or more characteristic models are employed to calculate choice probabilities and reveal emergent behaviors based on the awareness state that, in part, minimize and/or eliminate overestimation and/or underestimation of impressions (e.g., advertising impressions).
While the illustrated example determination of awareness state (block 412) of FIG. 5 is shown to occur after generating simulation conditions (block 410) via the example simulation framework manager 202, such illustration is provided for convenience rather than limitation. Turning to FIG. 5, the example awareness manager 208 selects an agent from the set of agents derived from the human respondents pool 102 (block 502) and determines whether the selected agent is aware of the original product of interest (block 504). To determine whether the selected respondent is aware of the original product of interest (block 504), the example awareness manager 206 retrieves stored awareness state information for that agent, which may have been originally derived from the example human respondent pool 102. In the event that the agent is unaware of the original product of interest (block 504), then the agent is identified as having an awareness state of unaware and the restage product is not eligible to be considered for purchase (block 508). This jump in logic between original product awareness and the eligibility to consider the restage product is a result of two assumptions. First, a consumer must be aware of a product to consider for purchase, and second, awareness of the original core product is inherent in awareness of the restage product (i.e. it is not possible to be aware of a restage, but unaware of the core product to which the restage was applied.). Generally speaking, the identification of awareness states governs which utility values should be applied in a simulated purchase decisions for restaged products.
If the selected agent is aware of the original product (block 504), then the example awareness manager 208 continues to determine whether the selected agent is also aware of the restage (block 514). If not, then the example awareness manager 208 associates the agent as having an awareness state related only to the original product of interest (block 516) so that only the utility values associated with the original product of interest are applied after during the shopping simulation(s). The utility values associated with the original product of interest are applied even if, during the shopping simulation(s), the agent is actually considering restage product. This models a situation in which a consumer may purchase the restage product while being in a state of ignorance that a change has occurred to the original product and/or its associated attributes (e.g., feature improvement, trade dress changes, packaging changes, etc.). For example, the agent may purchase the restage product because that agent is primarily familiar with a logo, trademark, shape, and/or trade dress of the original product from which the restage is derived.
If the agent is aware of the original product of interest (block 504), and also aware of the restage product (block 514), then the selected agent is associated with an awareness state associated with both the original product of interest and the restage product (block 518). As a result, utility values from both the original product of interest and the restage product will be applied during subsequent modeling activities. In the event that there are no additional agents for which an awareness state is to be determined (block 510), control returns to the example process 400 of FIG. 4.

In the illustrated example process 400 of FIG. 4, the example relative probability calculator 210 operates to reveal a relative understanding of preferences between one or more original products, and/or to reveal a relative understanding of preferences between one or more original products with one or more restage products (block 414). Any suitable technique may be employed to calculate the choice probabilities including, but not limited to a multinomial logit (MNL) model. As described above, the choice probability value for any particular product (e.g., an original product) or any particular restage product is affected by the other products available in a set of products available for purchase by the agent. As such, the relative probability calculator 210 may calculate choice probability values for any number of sets identified in block 404 and/or any number of custom sets generated by the example consumer purchase simulator 206. Additionally, the example simulation framework manager 202 may augment one or more attributes of the products available to the agents during the simulation(s) to identify one or more emergent patterns. For example, the simulation framework manager 202 may adjust attributes related to a product brand, a product size/volume, a product type (e.g., powder formula versus liquid formula), and/or a product price.

Awareness states for each agent in view of each restage are provided to the example simulation framework manager 202 to simulate agent purchase conditions (block 416), which may include requesting consideration of the original product utility, applying a combination of both the original and restage utility values, or applying no utility value at all. As described above, the example awareness rules in connection with FIGS. 3 and 5 identify a corresponding awareness state of each agent in view of each restage, and a corresponding utility is chosen based on that awareness state. The example simulation framework manager 202 models each respondent as an autonomous decisionmaking entity to identify emergent patterns of the group of respondents. Any number of iterations may be performed by the example simulation framework manager 202 to simulate agent purchase conditions 417 before outputting one or more simulation results (block 418). As described above, the agent based model is one example technique to treat each agent as an autonomous decisionmaking entity. The outputs of the simulation may include, but are not limited to, unit sales and share, volume sales and share, value sales and share, trial rates, repeat rates, etc. Sales forecasters may use this information for to make decisions to move forward to market with initiatives, plan for demand, improve marketing effectiveness, etc.

FIG. 6 is a schematic diagram of an example processor platform P100 that may be used and/or programmed to implement any or all of the example example discrete choice exercise engine 104, the example utility estimator 106, the example simulation framework manager 202, the example agent manager 204, the example consumer purchase simulator 206, the example awareness manager 208, and/or the example relative probability calculator 210 of FIGS. 1 and 2. For example, the processor platform P100 can be implemented by one or more generalpurpose processors, processor cores, microcontrollers, etc.

The processor platform P100 of the example of FIG. 6 includes at least one generalpurpose programmable processor P105. The processor P105 executes coded instructions P110 and/or P112 present in main memory of the processor P105 (for example, within a RAM P115 and/or a ROM P120). The processor P105 may be any type of processing unit, such as a processor core, a processor and/or a microcontroller. The processor P105 may execute, among other things, the example processes of FIGS. 4 and 5 to implement the example methods and apparatus described herein.

The processor P105 is in communication with the main memory (including a ROM P120 and/or the RAM P115) via a bus P125. The RAM P115 may be implemented by dynamic random access memory (DRAM), synchronous dynamic random access memory (SDRAM), and/or any other type of RAM device, and ROM may be implemented by flash memory and/or any other desired type of memory device. Access to the memory P115 and the memory P120 may be controlled by a memory controller (not shown).

The processor platform P100 also includes an interface circuit P130. The interface circuit P130 may be implemented by any type of interface standard, such as an external memory interface, serial port, generalpurpose input/output, etc. One or more input devices P135 and one or more output devices P140 are connected to the interface circuit P130. Although certain example methods, apparatus and articles of manufacture have been described herein, the scope of coverage of this patent is not limited thereto. On the contrary, this patent covers all methods, apparatus and articles of manufacture fairly falling within the scope of the appended claims either literally or under the doctrine of equivalents.

## Claims

1. A computer implemented method to model consumer purchase decisions for restage products, comprising:
receiving utility values associated with at least one of a product or a product attribute;
identifying an agent awareness state associated with the restage product and the original product;
calculating a choice probability for the restage product based on the estimated utility values associated with the identified awareness state; and
outputting the choice probability for use in a simulation of consumer purchase.

2. A method as defined in claim 1, wherein receiving the utility values further comprises retrieving respondent choice data from a panel of respondents participating in a discrete choice study.

3. A method as defined in claim 2, further comprising projecting the utility values of the panel of respondents to a set of agents to participate in at least one consumer purchase simulation.

4. A method as defined in claim 3, further comprising initializing each agent within the set of agents with at least one purchasing rule.

5. A method as defined in claim 4, wherein the at least one purchasing rule comprises at least one of a shopping frequency or an awareness state.

6. A method as defined in claim 3, wherein calculating the choice probability further comprises applying the received utility values to a multinomial logit model.

7. A method as defined in claim 6, further comprising simulating consumer purchase decisions based on the choice probability and the received utility values associated with the agent awareness state.

8. A method as defined in claim 7, wherein simulating consumer purchase decisions further comprises applying the received utility values and the choice probability to an agent based model.

9. A method as defined in claim 7, further comprising calculating an emergent pattern based on a plurality of product and restage product sets available to the set of agents in the at least one purchasing simulation.

10. A method as defined in claim 1, wherein identifying the agent awareness state further comprises identifying an unaware state when the agent is unaware of the original product and unaware of the restage product.

11. A method as defined in claim 1, wherein identifying the agent awareness state further comprises identifying a state indicative of agent awareness of the original product and unawareness of the restage product.

12. A method as defined in claim 11, wherein calculating the choice probability further comprises applying the received utility value associated with the original product to a pattern model when the agent is aware of the original product and unaware of the restage product.

13. An apparatus to model a restage product, comprising:
a utility estimator to estimate utility values associated with an original product and a restage change;
an awareness manager to identify a respondent awareness state of a plurality of agents associated with the restage product and the original product; and
a relative probability calculator to calculate a choice probability value for the restage product and the original product based on the calculated utility values associated with the respondent awareness state.

14. An apparatus as defined in claim 13, further comprising an agent manager to project the plurality of respondents to a plurality of agents to participate in at least one purchasing simulation.

15. An article of manufacture storing machine accessible instructions that, when executed, cause a machine to:
receive utility values associated with at least one of a product or a product attribute;
identify an agent awareness state associated with the restage product and the original product;
calculate a choice probability for the restage product based on the estimated utility values associated with the identified awareness state; and
output the choice probability for use in a simulation of consumer purchase.
